# EUROPÄISCHE PATENTSCHRIFT

(11) **EP 3 694 684 B1**
(45) Veröffentlichungstag und Bekanntmachung des Hinweises auf die Patenterteilung: **02.03.2022**
(21) Anmeldenummer: 18830361.4
(22) Anmeldetag: 21.12.2018
(51) Int. Cl.: B23K 26/354, B23K 31/02, C21D 9/50, C23C 4/00, H01T 13/39, H01T 13/46, B23K 101/00, B23K 101/36

(54) **ZÜNDKERZE UND VERFAHREN ZUR HERSTELLUNG EINER ZÜNDKERZE**
SPARK PLUG AND METHOD FOR PRODUCING A SPARK PLUG
BOUGIE D'ALLUMAGE ET PROCÉDÉ DE FABRICATION D'UNE BOUGIE D'ALLUMAGE

(43) Veröffentlichungstag der Anmeldung: 19.08.2020
(73) Patentinhaber: Innio Jenbacher GmbH & Co OG, 6200 Jenbach (AT)
(72) Erfinder: KLAUSNER, Johann, 6391 St. Jakob i.H. (AT); LANGSENLEHNER, Manfred, 8605 Kapfenberg (AT); GRABNER, Robert, 8605 Pogier (AT)
(74) Vertreter: Torggler & Hofmann Patentanwälte - Innsbruck
(86) Internationale Anmeldenummer: PCT/AT2018/060316
(87) Internationale Veröffentlichungsnummer: WO 2020/124103

(56) Entgegenhaltungen:
- EP-A1- 3 068 001
- CN-A- 108 977 805
- DE-A1- 10 025 048

## Beschreibung

Die Erfindung betrifft ein Verfahren zur Herstellung einer Zündkerze für einen Verbrennungsmotor mit den Merkmalen des Oberbegriffs des Anspruchs 1 und eine Zündkerze für einen Verbrennungsmotor mit den Merkmalen des Oberbegriffs des Anspruchs 11.

Gattungsgemäße Zündkerzen weisen eine in Bezug auf eine Längsachse der Zündkerze zentral angeordnete Mittelelektrode und wenigstens eine radial von dieser beabstandete Massenelektrode auf. Zwischen der Mittelelektrode und der wenigstens einen Massenelektrode ist zwischen einander zugewandten Flächen (Zündflächen) der Mittelelektrode und der wenigstens einen Massenelektrode der Zündspalt gebildet.

Es ist bekannt, die Mittelelektrode und/oder die wenigstens eine Massenelektrode zumindest zweiteilig auszubilden, wobei die Zündflächen jeweils von einem auf einem Massenelektrodenträger bzw. einem Mittelelektrodenträger angeordneten Edelmetallkörper gebildet werden. Der jeweilige Edelmetallkörper ist mit dem Massenelektrodenträger bzw. dem Mittelelektrodenträger über eine Schweißverbindung verbunden. Eine solche Zündkerze geht beispielsweise aus EP 0 859 436 A1 oder EP 3 068 001 A1 hervor.

Die Herstellung gattungsgemäßer Zündkerzen erfolgt beispielsweise mit dem Laserschweißverfahren.

Zündkerzen sind im Betrieb des Verbrennungsmotors hohen Temperaturen und mechanischen Drücken ausgesetzt, was im Laufe der Zeit zu Materialabtrag an Elektrodenmaterial im Zündspalt der Zündkerze und damit zu einer Verringerung der Lebensdauer führt. Ein weiterer Nachteil von aus dem Stand der Technik bekannten Zündkerzen sind Veränderungen im Bereich der in Richtung Brennraum (zündseitig) zeigenden Stirnseite bzw. Stirnfläche des Zündkerzen-Pins und Edelmetallkörpers, welche durch Heißkorrosion oder Oxidation verursacht werden.

Im Stand der Technik wurde versucht, die Zündkerze so weit wie möglich außerhalb des Brennraums anzuordnen, was aber den Nachteil mit sich bringt, dass damit eine Funkenlage der Zündkerze nicht so weit im Brennraum angeordnet ist, wie dies eigentlich für eine adäquate Zündung des Brennstoffes notwendig ist.

Eine weitere Strategie des Standes der Technik besteht darin, die in die Komponenten der Zündkerze eingebrachte Wärmemenge so schnell und so umfassend wie möglich in den Zylinderkopf (oft unter Verwendung einer Zündkerzenhülse) einzubringen. Zu diesem Zweck weisen Mittelelektrodenträger häufig einen Kern aus gut leitfähigem Material wie zum Beispiel Kupfer auf. Problematisch ist allerdings, dass die Fläche des Kontaktbereichs zwischen einem die Mittelelektrodenträger lagernden Isolierkörper (meist aus Keramik gefertigt) und dem Zündkerzengehäuse sehr klein ist, sodass die Wärme im Bereich der Stirnseite des Mittelelektrodenträgers nicht in der Weise abgeleitet wird, um besagte Probleme zu vermeiden.

Weitere aus dem Stand der Technik bekannte Ausführungsformen sind aus der DE 100 25 048 A1 (Basis für den Oberbegriff der Ansprüche 1 und 11) und der CN 108 977 805 A bekannt.

Aufgabe der Erfindung ist die Bereitstellung eines gattungsgemäßen Verfahrens zur Herstellung einer Zündkerze für einen Verbrennungsmotor und einer Zündkerze für einen Verbrennungsmotor, bei welchen die Lebensdauer, vorzugsweise durch Minimierung der Heißkorrosion und/oder Oxidation, verlängert wird.

Diese Aufgabe wird durch ein Verfahren zur Herstellung einer Zündkerze für einen Verbrennungsmotor mit den Merkmalen des Anspruchs 1 und eine Zündkerze für einen Verbrennungsmotor mit den Merkmalen des Anspruchs 11 gelöst. Weil bei einem erfindungsgemäßen Verfahren vorgesehen ist, dass zur Verbesserung ausgewählter Stoffeigenschaften der Schweißverbindung (welche vorzugsweise mittels Laserschweißen hergestellt ist) - und ggf. einer sie umgebenden Zone - ein Laserstrahl auf die Schweißverbindung - und ggf. die sie umgebende Zone - gerichtet wird und dass ein die ausgewählten Stoffeigenschaften verbesserndes Pulver in die vom Laserstrahl an ihrer Oberfläche aufgeschmolzene Schweißverbindung - und ggf. in die sie umgebende Zone - eingebracht wird, sodass das Pulver schmilzt und sich durch Verbinden des geschmolzenen Pulvers mit dem aufgeschmolzenen Mischgefüge der Oberfläche der Schweißverbindung - und ggf. der sie umgebenden Zone - ein behandelter (legierter) Bereich mit verbesserten Stoffeigenschaften ergibt, ist die Schweißnaht der Schweißverbindung, welche im Betrieb des Verbrennungsmotors in den Brennraum hinein ragt, durch den behandelten Bereich geschützt, da dieser eine Heißkorrosion im Bereich der Schweißnaht - und ggf. der sie umgebenden Zone - verhindert und das Oxidationsverhalten des behandelten Bereichs günstiger ist als das Oxidationsverhalten der unbehandelten Schweißnaht.

In Bezug auf die erfindungsgemäße Zündkerze (welche bevorzugt nach dem erfindungsgemäßen Verfahren hergestellt ist) ist vorgesehen, dass im Bereich der Schweißverbindung (welche vorzugsweise durch Laserschweißen hergestellt ist) - und ggf. einer sie umgebenden Zone - ein durch Aufschmelzen der Schweißverbindung - und ggf. der sie umgebenden Zone - und Einbringen von Pulver erzeugter, legierter Bereich vorhanden ist. Der legierte Bereich schützt die Schweißverbindung - und ggf. die sie umgebende Zone - vor Heißkorrosion. Das Oxidationsverhalten des behandelten Bereichs ist folglich günstiger als das Oxidationsverhalten der unbehandelten Schweißverbindung.

Die Schweißverbindung kann in Form einer Schweißnaht vorliegen. Bevorzugt ist die Schweißnaht eine Kehlnaht.

Vorteilhafte Ausführungsformen der Erfindung sind in den abhängigen Ansprüchen definiert.

Bei einem Ausführungsbeispiel des erfindungsgemäßen Verfahrens ist vorgesehen, dass als Elektrodenträger ein Mittelelektrodenträger verwendet wird. Dabei ist bevorzugt vorgesehen, dass der Edelmetallkörper vor Herstellung der zumindest einen Schweißverbindung unter Ausbildung einer Stufe mit dem Mittelelektrodenträger verbunden wird.

Des Weiteren kann bevorzugt vorgesehen sein, dass die Stufe in einen Endbereich bzw. im Bereich der Stirnseite des Mittelelektrodenträgers eingearbeitet wird und/oder der Edelmetallkörper unter Belassung einer Stufe auf den Mittelelektrodenträger aufgesetzt wird, wobei die letzgenannte Stufe im Wesentlichen deswegen gebildet wird, weil der aufgebrachte Edelmetallkörper über die Stirnseite des Mittelelektrodenträgers ragt, wodurch eine im Wesentlichen (konkave) Vertiefung entsteht.

Des Weiteren kann bevorzugt vorgesehen sein, dass das Pulver in die Vertiefung eingebracht wird und zwar bevorzugt in einer solchen Menge, dass die (konkave) Vertiefung aufgefüllt wird oder von aufgeschmolzenem und wieder erstarrtem Pulver bedeckt wird.

Es kann vorteilhaft sein, wenn vorgesehen ist, dass ein ggf. überstehender Bereich an aufgeschmolzenem und wieder erstarrtem Pulver durch Materialabtrag (z. B. durch Fräsen, Drehen oder Schleifen) entfernt wird. Es kann vorgesehen sein, nach dem Materialabtrag ein Glätten der Oberfläche durchzuführen.

Bei einem Ausführungsbeispiel des erfindungsgemäßen Verfahrens ist vorgesehen, dass unmittelbar benachbart zum behandelten Bereich ein unbehandelter Bereich belassen wird, welcher vorzugsweise in Form eines benachbart zu einer Zündfläche der Elektrode angeordneter Bereich (welcher rechtwinklig zur Zündfläche verläuft) vorliegt. So kann vermieden werden, dass die Standzeit der Elektrode, vorzugsweise der Mittelelektrode, durch das Legieren mit dem Pulver negativ beeinflusst werden.

Bei einem Ausführungsbeispiel des erfindungsgemäßen Verfahrens ist vorgesehen, dass der Laserstrahl mit einem konvergenten oder divergenten (allgemein: defokussierten) Strahlabschnitt auf die Schweißverbindung und ggf. die sie umgebende Zone gerichtet wird. Der Brennpunkt des Laserstrahls befindet sich dann also während des Legierens unterhalb oder oberhalb der Schweißverbindung.

Bei einem Ausführungsbeispiel des erfindungsgemäßen Verfahrens ist vorgesehen, dass als verbesserte Stoffeigenschaft eine Erhöhung der Heißkorrosions- und/oder Oxidationsbeständigkeit ausgewählt wird und als Pulver ein heißkorrosions- und/oder oxidationsbeständiges Metallpulver, ggf. mit unterschiedlichen Materialkomponenten verwendet wird. Weitere oder alternative Stoffeigenschaften können z. B. verbesserte Temperaturbeständigkeit und/oder höhere Wärmeleitfähigkeit sein.

Bei einem Ausführungsbeispiel des erfindungsgemäßen Verfahrens ist vorgesehen, dass als Pulver ein korrosionsbeständiges Nickelpulver (beispielsweise erhältlich unter den Markennamen Inconel 600 oder Inconel 625) oder ein ein Keramikmaterial beinhaltendes Metallpulver verwendet wird.

Bei einem Ausführungsbeispiel des erfindungsgemäßen Verfahrens ist vorgesehen, dass das Pulver beabstandet von der Schweißverbindung - und/oder ggf. einer sie umgebenden Zone - in den Laserstrahl eingebracht, vorzugsweise eingeblasen, wird.

Bei einem Ausführungsbeispiel des erfindungsgemäßen Verfahrens ist vorgesehen, dass das Verfahren in einer Schutzatmosphäre (z. B. Argon) durchgeführt wird.

Bei einem Ausführungsbeispiel der erfindungsgemäßen Zündkerze ist vorgesehen, dass die über die zumindest eine Schweißverbindung miteinander verbundenen Komponenten Teile einer Elektrode der Zündkerze sind, vorzugsweise in Form eines Elektrodenträgers, besonders bevorzugt eines Mittelelektrodenträgers, und eines mit dem Elektrodenträger über die zumindest eine Schweißverbindung verbundenen Edelmetallkörpers. Ein Edelmetallkörper im Sinne der vorliegenden Offenbarung ist ein Körper, welcher entweder aus einem Edelmetall (vorzugsweise eine Edelmetall aufweisende Legierung) besteht oder mit einem solchen beschichtet ist.

Dabei ist bevorzugt vorgesehen, dass unmittelbar benachbart zum legierten Bereich ein unbehandelter Bereich belassen wird, welcher vorzugsweise in Form eines benachbart zu einer Zündfläche der Elektrode angeordneter Bereich (welcher rechtwinklig zur Zündfläche verläuft) vorliegt. So kann vermieden werden, dass die Standzeiten der Elektrode durch das Legieren mit dem Pulver negativ beeinflusst werden.

Die Zündfläche bzw. die beiden Zündflächen bilden dabei den Zündspalt. Vorzugsweise wird der zur Zündfläche der Mittelelektrode im Wesentlichen rechtwinklig und direkt angrenzende Bereich unbehandelt belassen.

Es kann vorgesehen sein, dass der Edelmetallkörper unter Ausbildung einer Stufe mit dem Mittelelektrodenträger verbunden ist. Dabei kann bevorzugt vorgesehen sein, dass die Stufe in einen Endbereich des Mittelelektrodenträgers eingearbeitet ist und/oder der Edelmetallkörper unter Belassung einer Stufe auf den Mittelelektrodenträger aufgebracht ist.

Es kann vorgesehen sein, dass eine Vertiefung vorliegt, welche durch aufgeschmolzenes und wieder erstarrtes Pulver bedeckt ist.

Dabei kann es vorteilhaft sein, dass ein ggf. überstehender Bereich an aufgeschmolzenem und wieder erstarrtem Pulver durch Materialabtrag entfernt wurde, sodass der Edelmetallkörper eine stufenlose, rechtwinklig zur Zündfläche verlaufende Oberfläche aufweist.

Bevorzugt ist bei einem Ausführungsbeispiel der erfindungsgemäßen Zündkerze vorgesehen, dass das Pulver ein korrosionsbeständiges Nickelpulver (beispielsweise erhältlich unter den Markennamen Inconel 600 oder Inconel 625) oder ein ein Keramikmaterial beinhaltendes Metallpulver ist.

Bei einem Ausführungsbeispiel der erfindungsgemäßen Zündkerze ist vorgesehen, dass zumindest der behandelte Bereich und vorzugsweise auch ein unmittelbar benachbart zum behandelten Bereich angeordneter weiterer, unbehandelter Bereich, insbesondere eine rechtwinklig zur Zündfläche verlaufende Oberfläche, ggf. des Edelmetallkörpers, mit einer Deckschicht oder mehreren, aufeinander angeordneten Deckschichten, welche vorzugsweise aus unterschiedlichen Materialien bestehen, beschichtet ist. Alternativ oder zusätzlich kann unterhalb des behandelten Bereichs wenigstens eine solche Deckschicht vorgesehen sein (dann erfolgt natürlich die Aufbringung der Deckschicht(en) vor der Herstellung des behandelten Bereichs).

Bei einem Ausführungsbeispiel der erfindungsgemäßen Zündkerze weist diese eine in Form eines Ringes, bevorzugt eines scheibenförmigen Kreisringes, ausgebildete Massenelektrode auf (eine sogenannte Ringelektrode), wobei eine Zündfläche durch eine innere Mantelfläche des Ringes gebildet ist. Die Massenelektrode kann auf ihrer rechtwinklig zur Zündfläche verlaufenden Oberfläche zumindest eine, bevorzugt eine Vielzahl von Durchtrittsöffnung(en) aufweisen. Durch die Durchtrittsöffnung(en) kann im Betrieb der Zündkerze Brennstoff-Luft-Gemisch in diese eintreten.

Bei einem Ausführungsbeispiel der erfindungsgemäßen Zündkerze ist vorgesehen, dass der legierte Bereich eine verbesserte Heißkorrosions- und/oder Oxidationsbeständigkeit aufweist. Weitere oder alternative verbesserte Eigenschaften können sein: verbesserte Temperaturbeständigkeit und/oder höhere Wärmeleitfähigkeit.

Bevorzugt ist die Massenelektrode in Form eines Massenelektrodenträger (dieser kann mit dem Zündkerzengehäuse - vorzugsweise über eine Schweißverbindung - verbunden sein) und eines mit diesem (vorzugsweise über eine Schweißverbindung) verbundenen Edelmetallkörpers ausgebildet. Sind die Maßnahmen des vorstehenden Absatzes bei einer solchen Massenelektrode vorgesehen, gelten die in Bezug auf den Ring gemachten Ausführungen in Bezug auf den Edelmetallkörper der Massenelektrode. Der Edelmetallkörper kann auf eine Stufe des Massenelektrodenträgers oder auf eine Stirnfläche des Massenelektrodenträgers aufgesetzt und mit diesem verbunden sein.

Massenelektrode und Mittelelektrode können in Draufsicht kreisringförmig bzw. kreisförmig ausgebildet sein, aber auch jeweils einen polygonalen Umfangsrand aufweisen.

Das erfindungsgemäße Verfahren kann alternativ oder zusätzlich in Bezug auf eine Massenelektrode verwendet werden und zwar bevorzugt in Bezug auf eine Schweißverbindung zwischen einem Massenelektrodenträger und einem mit dieser verbundenen Edelmetallkörper. Dies gilt auch in Bezug auf die beschriebenen Ausführungsbeispiele und in Bezug auf die erfindungsgemäße Zündkerze und deren beschriebenen Ausführungsbeispiele.

Es sei angemerkt, dass die Erfindung nicht auf Zündkerzen mit Massenelektroden in Form von Ringelektroden beschränkt ist, sondern auch bei Zündkerzen mit einer Massenelektroden beliebiger Ausführung, beispielsweise in Form zumindest einer Hakenelektrode, einsetzbar ist.

Ausführungsbeispiele der Erfindung werden anhand der Figuren diskutiert. Es zeigen:
- Fig. 1: eine hergestellte Zündkerze
- Fig. 2a-d: schematische Schnittdarstellungen durch eine Zündkerze nach Fig. 1 vor bzw. nach dem Legieren und eine isometrische, geschnittene Darstellung
- Fig. 3: das Aufbringen und gleichzeitige Aufschmelzen von Pulver
- Fig. 4a,b: eine Schnittdarstellung entsprechend Fig. 2a und ein Foto dazu
- Fig. 5a,b: eine Schnittdarstellung und ein Foto nach dem Legieren und vor einem Schleifvorgang
- Fig. 6a,b: eine Schnittdarstellung und und eine Detaildarstellung eines Ausführungsbeispiels der Erfindung
- Fig. 7a-e: Schritte des erfindungsgemäßen Verfahrens
- Fig. 8: eine Schnittdarstellung eines weiteren Ausführungsbeispiels der Erfindung

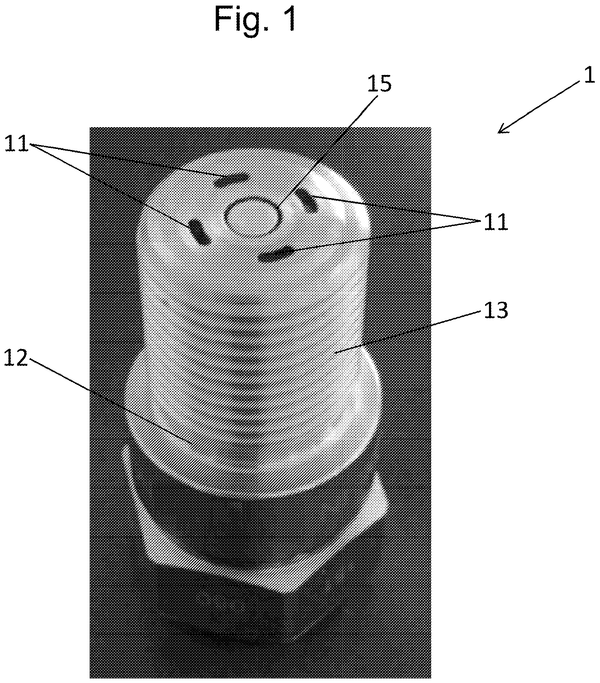

Fig. 1 zeigt ein Foto einer Zündkerze 1.

Die Zündkerze 1 weist ein Zündkerzengehäuse 12 auf, welches in einem zündseitigen Bereich mit einem Gewinde 13 versehen ist. Ein ringförmiger Zündspalt 15 ist zwischen einer Mittelelektrode und einer als Ringelektrode ausgebildeten Massenelektrode ausgebildet. Die Massenelektrode ist hier mit beispielhaft vier Öffnungen 11 versehen, welche im Betrieb der Zündkerze 1 in einem Verbrennungsmotor den Durchtritt von Verbrennungsgasen gestatten.

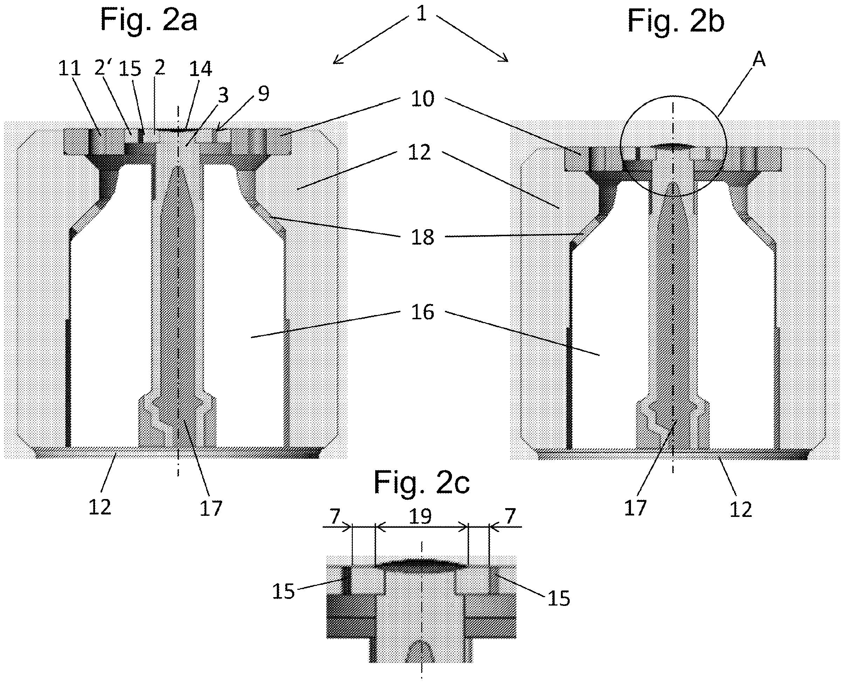

Der Aufbau der in Fig. 1 dargestellten Zündkerze 1 ist in den Fig. 2a-d erkennbar, wobei die Fig. 2a ein Zwischenprodukt des erfindungsgemäßen Verfahrens zeigt:
Die Zündkerze 1 weist innerhalb des Zündkerzengehäuses 12 (auf die Darstellung des Gewindes 13 wurde verzichtet) in bekannter Weise einen Keramikkörper 16 auf, in welchem in einer zentralen Öffnung ein Stift angeordnet ist, welcher mit seinem zündseitigen Ende einen Elektrodenträger der Mittelelektrode (Mittelelektrodenträger 3) bildet. Zur verbesserten Wärmeabfuhr kann der Stift wie dargestellt einen Kern 17 aus gut wärmeleitfähigem Material (z. B. Kupfer) aufweisen. Über eine zwischen einer Schulter des Keramikkörpers 16 und dem Zündkerzengehäuse 12 angeordnete Dichtung 18 erfolgt die Ableitung von über die Elektroden eingebrachter Wärme in das Zündkerzengehäuse 12.

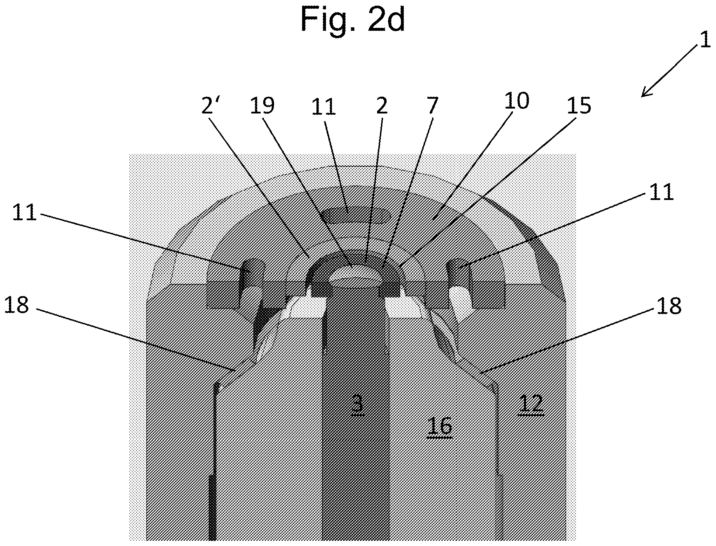

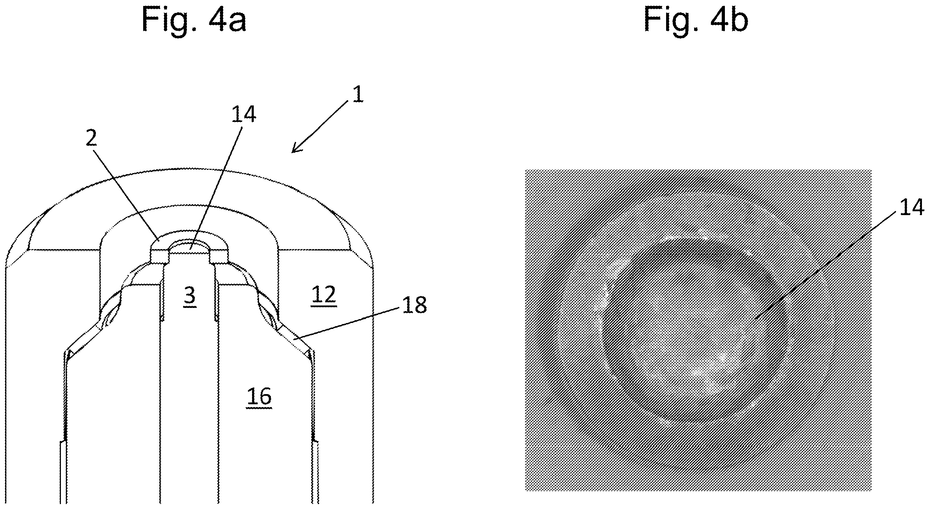

Am Mittelelektrodenträger 3 ist (hier durch Laserschweißen) mittels einer Schweißverbindung ein Edelmetallkörper 2 befestigt. Der Edelmetallkörper 2 ist in Form einer hier kreisförmigen Scheibe ausgebildet und auf eine Schulter einer Stufe 4 des Mittelelektrodenträgers 3 (hier in Form eines Zündkerzen-Pins) aufgesetzt. Die Schweißverbindung erstreckt sich über die gesamte Stufe 4. Bevorzugt ragt der Edelmetallkörper 2 vor dem Schweißprozess, vorzugsweise Laserschweißprozess, über die zündseitige Stirnseite des Mittelelektrodenträgers 3 vor, um am Übergang von Edelmetallkörper 2 zu Mittelelektrodenträgers 3 eine Schweißnaht, vorzugsweise eine Kehlnaht zu erzeugen. Dies resultiert in eine im Wesentlichen konkave Vertiefung 14 im entsprechenden Bereich (Fig. 2a und 4b), welche durch das erfindungsgemäße Herstellungsverfahren nur teilweise oder komplett aufgefüllt wird (Fig. 2b, 2c und 2d). Am Zündkerzengehäuse 12 ist ein Massenelektrodenträger 10 befestigt. An diesem ist (hier durch Laserschweißen) ein Edelmetallkörper 2′ in Form eines Ringes befestigt. Die einander zugewandten Zündflächen 9 der Edelmetallkörper 2, 2'definieren den Zündspalt 15.

Die Darstellung der Fig. 2a, welche in Bezug auf das Herstellungsverfahren einen Zwischenschritt darstellt, entspricht den Zündkerzen 1 des Standes der Technik. Die Schweißverbindung zwischen Edelmetallkörper 2 und Mittelelektrodenträger 3 (und jene zwischen Edelmetallkörper 2'und Massenelektrodenträger 10) ist im Betrieb der Zündkerze 1 in einem Verbrennungsmotor ungeschützt den Verbrennungsgasen ausgesetzt. In Fig. 2b ist im Bereich der Schweißverbindung ein durch Aufschmelzen einer Oberfläche der Schweißverbindung und durch Einbringen von Pulver 5 erzeugter, legierter Bereich erkennbar, welcher nicht nur die Schweißverbindung selbst abdeckt, sondern sich in diesem Ausführungsbeispiel in eine zur Schweißverbindung benachbarte Zone hinein erstreckt, und zwar radial betrachtet sowohl zu größeren Radien hin (wobei allerdings benachbart zum Zündspalt 15 ein unbehandelter Bereich 7 verbleibt) als auch zu kleineren Radien hin (hier über den gesamten zentralen Bereich). Die in den Fig. 2b und 2d dargestellte Mittelelektrode weist daher ausgehend vom Zündspalt 15 radial nach innen einen unbehandelten Bereich 7 und an diesen anschließend einen behandelten Bereich 19 auf (vgl. die Detaildarstellung der Fig. 2c).

Auch in Bezug auf die Schweißverbindung zwischen Massenelektrodenträger 10 und dem Edelmetallkörper 2′ der Massenelektrode (oder alternativ nur in Bezug auf diese) könnte durch das Verfahren ein legierter Bereich zum Schutz der Schweißverbindung erzeugt werden, was in diesem Beispiel jedoch nicht vorgesehen ist.

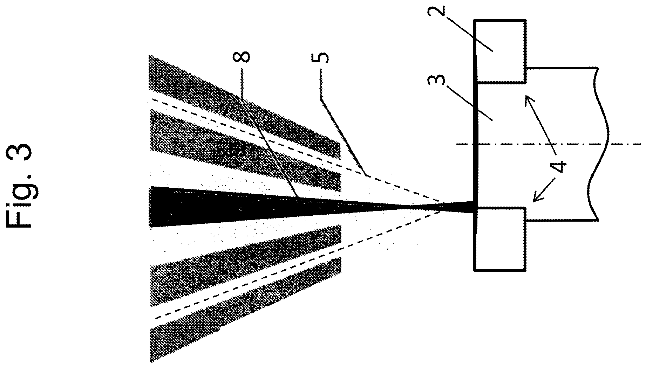

In Fig. 3 ist die Erzeugung des legierten Bereichs dargestellt. Dies erfolgt, indem ein Laserstrahl 8 auf die Schweißverbindung gerichtet wird und ein die ausgewählten Stoffeigenschaften verbesserndes Pulver 5 in die vom Laserstrahl 8 an ihrer Oberfläche aufgeschmolzene Schweißverbindung eingebracht wird, sodass das Pulver 5 schmilzt und sich durch Verbinden des geschmolzenen Pulvers 5 mit dem aufgeschmolzenen Mischgefüge der Oberfläche der Schweißverbindung der behandelte (legierte) Bereich mit verbesserten Stoffeigenschaften ergibt.

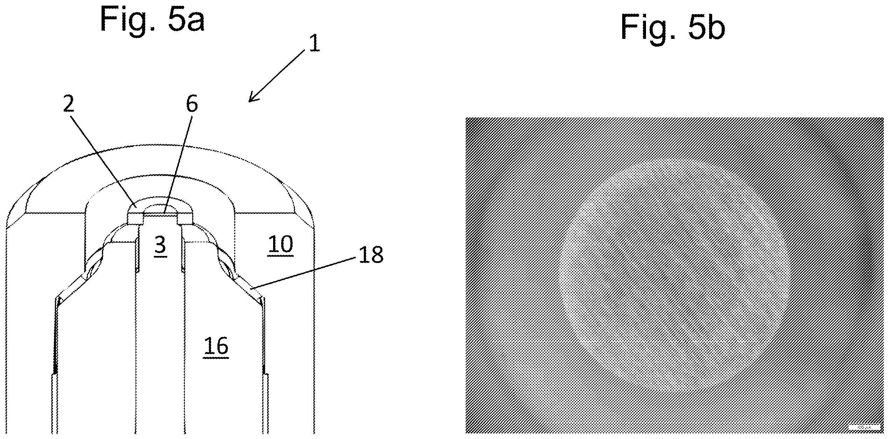

Ebenso kann vorgesehen sein, dass die Vertiefung 14 durch das Verfahren gefüllt wird. Ein insbesondere in Fig. 2c erkennbarer Überschuss des aufgebrachten Materials im Bereich 19 kann anschließend durch drehen, fräsen, schleifen und dergleichen abgetragen werden, sodass eine plane Fläche gemäß Fig. 5a und Fig. 5b entsteht.

In Fig. 3 ist nur der zündseitige Bereich der Mittelelektrode dargestellt. Es ist erkennbar, dass der Laserstrahl 8 mit einem defokussierten oder "out of focus"-Beleuchtung (d. h. konvergenten oder divergenten) Strahlabschnitt (in Fig. 3 unterhalb des Brennpunkts) auf die Schweißverbindung gerichtet wird. Das Pulver 5 wird hier noch oberhalb der Oberfläche der Schweißverbindung im divergenten Strahlabschnitt in den Laserstrahl 8 eingebracht.

Ein Vorteil der "out of focus"-Beleuchtung des Lasers ist, dass die Leistungsdichte des Laserstrahls 8 auf einer größeren Fläche homogener verteilt wird. Es hat sich herausgestellt, dass ein variabler thermischer Eintrag bei Verwendung desselben Laser-Setups erreicht werden kann, nämlich durch die Variation des Abstandes des Fokus zur zu bearbeitenden Fläche. Aufgrund der Notwendigkeit ledlich eines Laser-Setups, können Kosten eingespart werden.

Die Fig. 4a zeigt korrespondierend zur Fig. 2a (wobei allerdings die Massenelektrode nicht dargestellt ist) den zündseitigen Bereich der Zündkerze 1 in einer schematischen Schnittdarstellung. In einem Foto einer Draufsicht (Fig. 4b). des Zündkerzen-Pins ist ein auf den Mittelelektrodenträger 3 aufgebrachter, vorzugsweise aufgepresster, Edelmetallkörper 2 nach dem Laserschweißprozess erkennbar. Die Schweißverbindung wird im Wesentlichen durch eine Kehlnaht gebildet. Ferner ist erkennbar, dass durch den Schweißprozess eine Vertiefung 14 gebildet wird.

Die Fig. 5a zeigt den zündseitigen Bereich der Zündkerze 1 in einer schematischen Schnittdarstellung.Hierbei werden mittels Materialabtrag (hier: Schleifen) ein Überstand an durch den Laser verfestigten Pulver 5 entfernt wird, sodass zündseitig der unbehandelte Bereich 7 und der behandelte Bereich 19 bündig aneinander anschließen.

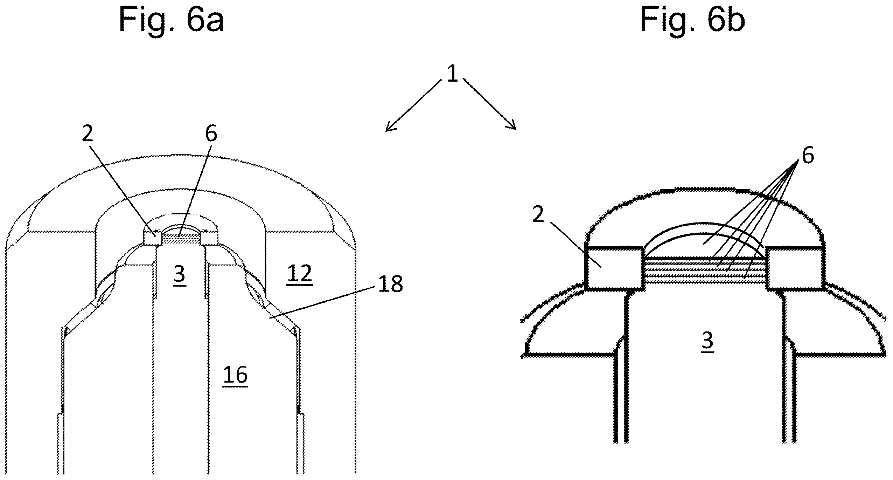

Wie in den Fig. 6a und 6b (Detail zur Fig. 6a) dargestellt, ist in einem Ausführungsbeispiel vorgesehen, dass zumindest der behandelte Bereich 19 und vorzugsweise auch ein unmittelbar benachbart zum behandelten Bereich 19 angeordneter weiterer, unbehandelter Bereich 7 mit mehreren, aufeinander angeordneten Deckschichten 6, welche vorzugsweise aus unterschiedlichen Materialien bestehen, beschichtet wird. Diese Beschichtung kann mit beliebigen bekannten Technologien erfolgen.

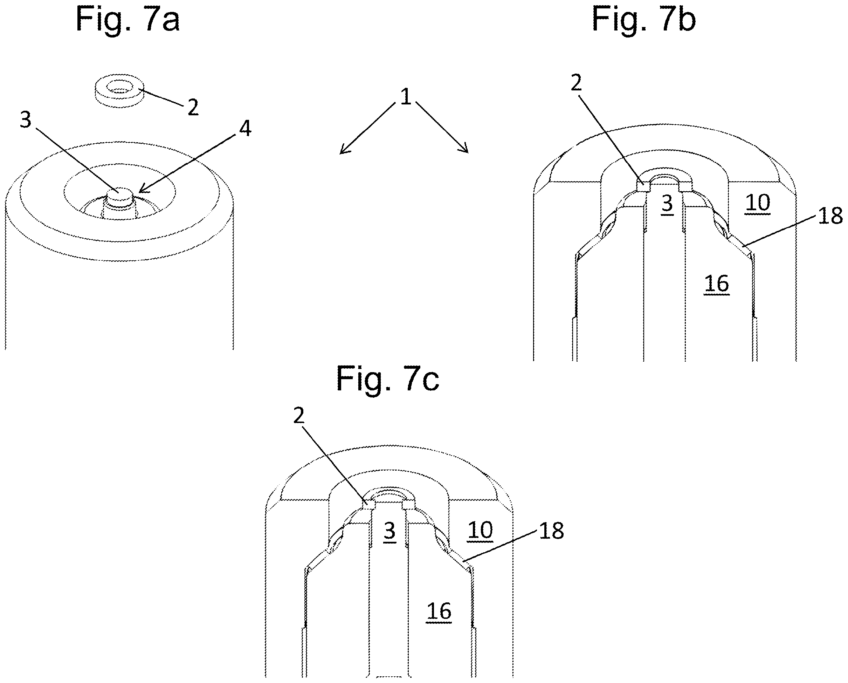

In Fig. 7a-e sind die Zwischenprodukte des erfindungsgemäßen Verfahrens dargestellt.

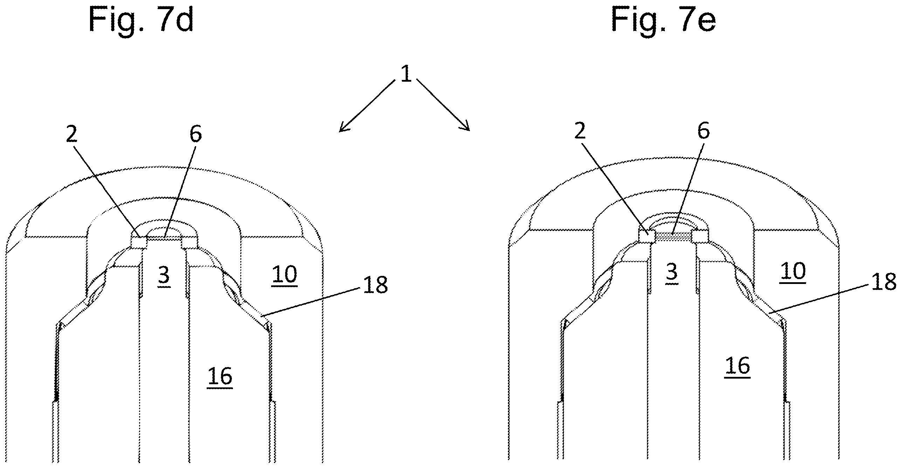

In Fig. 7a wird der Edelmetallkörper 2 auf eine abgefaste Spitze des Mittelelektrodenträgers 3 aufgesetzt und mit dieser durch Laserschweißen verschweißt, sodass sich der Zustand nach Fig. 7b ergibt. Im Übergang zur Fig. 7c ist wie oben beschrieben der legierte Bereich erzeugt worden. Im Übergang zur Fig. 7d wurde ein Überstand an Pulver 5 entfernt. In der Variante nach Fig. 7e wurden mehrere, aufeinander angeordnete Deckschichten 6 auf dem legierten Bereich angeordnet.

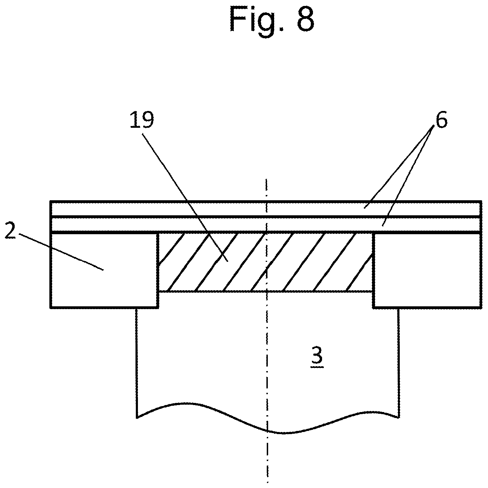

Im Ausführungsbeispiel der Fig. 8 ist nur die Spitze des Mittelelektrodenträgers 3 samt Edelmetallkörper 2 dargestellt. Hier überdecken beispielhaft zwei Deckschichten 6 den gesamten Edelmetallkörper 2 inklusive des behandelten Bereichs 19 und erstrecken sich bis zur Zündfläche 9. Anders als dargestellt, könnten auch mehr als zwei Deckschichten 6 oder nur eine Deckschicht 6 vorgesehen sein.

### Bezugszeichenliste:

- 1: Zündkerze
- 2, 2′: Edelmetallkörper
- 3: Mittelelektrodenträger
- 4: Stufe
- 5: Pulver
- 6: Deckschicht
- 7: unbehandelter Bereich
- 8: Laserstrahl
- 9: Zündfläche
- 10: Massenelektrodenträger
- 11: Öffnungen in einem Edelmetallkörper der Massenelektrode
- 12: Zündkerzengehäuse
- 13: Gewinde
- 14: Vertiefung
- 15: Zündspalt
- 16: Keramikkörper
- 17: Kern
- 18: Dichtung
- 19: behandelter Bereich

## Patentansprüche

1. Verfahren zur Herstellung einer Zündkerze (1) für einen Verbrennungsmotor, wobei die Zündkerze (1) wenigstens zwei Komponenten aufweist, welche über zumindest eine, in einem Schweißvorgang hergestellte Schweißverbindung miteinander verbunden sind, **dadurch gekennzeichnet, dass** zur Verbesserung ausgewählter Stoffeigenschaften der Schweißverbindung ein Laserstrahl (8) auf die Schweißverbindung gerichtet wird und dass ein die ausgewählten Stoffeigenschaften verbesserndes Pulver (5) in die vom Laserstrahl (8) an ihrer Oberfläche aufgeschmolzene Schweißverbindung eingebracht wird, sodass das Pulver (5) schmilzt und sich durch Verbinden des geschmolzenen Pulvers (5) mit dem aufgeschmolzenen Mischgefüge der Oberfläche der Schweißverbindung ein behandelter Bereich mit verbesserten Stoffeigenschaften ergibt, wobei Teile einer Elektrode der Zündkerze als die wenigstens zwei, über die zumindest eine Schweißverbindung miteinander verbundenen Komponenten verwendet werden, vorzugsweise in Form eines Elektrodenträgers und eines mit dem Elektrodenträger über die zumindest eine Schweißverbindung verbundenen Edelmetallkörpers (2, 2'), wobei zumindest der behandelte Bereich (19) und vorzugsweise auch ein unmittelbar benachbart zum behandelten Bereich (19) angeordneter weiterer, unbehandelter Bereich (7) mit einer Deckschicht (6) oder mehreren, aufeinander angeordneten Deckschichten (6), welche vorzugsweise aus unterschiedlichen Materialien bestehen, beschichtet wird und/oder unterhalb des behandelten Bereichs (19) wenigstens eine solche Deckschicht (6) angeordnet wird.

2. Verfahren nach Anspruch 1, wobei als Elektrodenträger ein Mittelelektrodenträger (3), vorzugsweise in Form eines Zündkerzen-Pins ausgebildet, verwendet wird.

3. Verfahren nach dem vorangehenden Anspruch, wobei der Edelmetallkörper (2, 2′) vor Herstellung der zumindest einen Schweißverbindung unter Ausbildung einer Stufe (4) mit dem Mittelelektrodenträger (3) verbunden wird.

4. Verfahren nach dem vorangehenden Anspruch, wobei die Stufe (4) in einen Endbereich des Mittelelektrodenträgers (3) eingearbeitet wird und/oder der Edelmetallkörper (2, 2′) unter Belassung einer Stufe (4) auf den Mittelelektrodenträger (3) aufgesetzt wird.

5. Verfahren nach einem der vorangehenden Ansprüche, wobei eine Vertiefung (14) vorhanden ist, in welche das Pulver (5) eingebracht wird und zwar bevorzugt in einer solchen Menge, dass die Vertiefung (14) aufgefüllt wird oder von aufgeschmolzenem und wieder erstarrtem Pulver (5) bedeckt wird.

6. Verfahren nach dem vorangehenden Anspruch, wobei eine ggf. überstehende Menge an aufgeschmolzenem und wieder erstarrtem Pulver (5) durch Materialabtrag entfernt wird.

7. Verfahren nach einem der vorangehenden Ansprüche, wobei unmittelbar benachbart zum behandelten Bereich (19) ein unbehandelter Bereich (7) belassen wird.

8. Verfahren nach einem der vorangehenden Ansprüche, wobei der Laserstrahl (8) mit einem defokussierten Strahlabschnitt auf die Schweißverbindung gerichtet wird.

9. Verfahren nach einem der vorangehenden Ansprüche, wobei als verbesserte Stoffeigenschaft eine Erhöhung der Heißkorrosions- und/oder Oxidationsbeständigkeit ausgewählt wird und als Pulver (5) ein heißkorrosions- und/oder oxidationsbeständiges Metallpulver, ggf. mit unterschiedlichen Materialkomponenten verwendet wird, wobei vorzugsweise vorgesehen ist, dass als Pulver (5) ein korrosionsbeständiges Nickelpulver oder ein ein Keramikmaterial beinhaltendes Metallpulver verwendet wird.

10. Verfahren nach einem der vorangehenden Ansprüche, wobei das Pulver (5) beabstandet von der Schweißverbindung in den Laserstrahl (8) eingebracht, vorzugsweise eingeblasen, wird.

11. Zündkerze (1) für einen Verbrennungsmotor, wobei die Zündkerze (1) wenigstens zwei Komponenten aufweist, welche über zumindest eine Schweißverbindung miteinander verbunden sind, **dadurch gekennzeichnet, dass** im Bereich der Schweißverbindung ein durch Aufschmelzen einer Oberfläche der Schweißverbindung und durch Einbringen von Pulver (5) erzeugter, legierter Bereich vorhanden ist, wobei zumindest der behandelte Bereich (19) und vorzugsweise auch ein unmittelbar benachbart zum behandelten Bereich (19) angeordneter weiterer, unbehandelter Bereich (7) mit einer Deckschicht (6) oder mehreren, aufeinander angeordneten Deckschichten (6), welche vorzugsweise aus unterschiedlichen Materialien bestehen, beschichtet ist und/oder unterhalb des behandelten Bereichs (19) wenigstens eine solche Deckschicht (6) angeordnet ist.

12. Zündkerze nach dem vorangehenden Anspruch, wobei die über die zumindest eine Schweißverbindung miteinander verbundenen Komponenten Teile einer Elektrode der Zündkerze (1) sind, vorzugsweise in Form eines Elektrodenträgers, besonders bevorzugt eines Mittelelektrodenträgers (3), und eines mit dem Elektrodenträger über die zumindest eine Schweißverbindung verbundenen Edelmetallkörpers (2).

13. Zündkerze nach einem der beiden vorangehenden Ansprüche, wobei unmittelbar benachbart zum legierten Bereich ein unbehandelter Bereich (19) belassen wird, welcher vorzugsweise in Form eines benachbart zu einer Zündfläche (9) der Elektrode angeordneter Bereich vorliegt.

## Claims

1. A method of producing a spark plug (1) for an internal combustion engine, wherein the spark plug (1) has at least two components which are connected together by way of at least one welded join produced in a welding operation, **characterised in that** to improve selected substance properties of the welded join a laser beam (8) is directed on to the welded join and that a powder (5) improving the selected substance properties is introduced into the welded join which is melted at its surface by the laser beam (8) so that the powder (5) melts and a treated region with improved substance properties is afforded by joining the melted powder (5) to the melted mixture structure of the surface of the welded join, wherein parts of an electrode of the spark plug are used as the at least two components which are connected together by way of the at least one welded join, preferably in the form of an electrode carrier and a noble metal body (2, 2') connected to the electrode carrier by way of the at least one welded join, wherein at least the treated region (19) and preferably also a further untreated region (7) which is arranged immediately adjacent to the treated region (19) are coated with a cover layer (6) or a plurality of mutually superposed cover layers (6) which preferably comprise different materials and/or at least one such cover layer (6) is arranged beneath the treated region (19).

2. A method according to claim 1, wherein a central electrode carrier (3), preferably in the form of a spark plug pin, is used as the electrode carrier.

3. A method according to the preceding claim, wherein the noble metal body (2, 2') is connected to the central electrode carrier (3) before production of the at least one welded join with the formation of a step (4).

4. A method according to the preceding claim, wherein the step (4) produced in an end region of the central electrode carrier (3) and/or the noble metal body (2, 2′) is fitted on to the central electrode carrier (3) leaving a step (4).

5. A method according to one of the preceding claims, wherein there is a recess (14) into which the powder (5) is introduced and more specifically preferably in such an amount that the recess (14) is filled up or is covered by powder which is melted thereon and hardened again.

6. A method according to the preceding claim, wherein a possibly protruding amount of powder (5) which is applied by melting and hardened again is removed by material ablation.

7. A method according to one of the preceding claims, wherein an untreated region (7) is left immediately adjacent to the treated region (19).

8. A method according to one of the preceding claims, wherein the laser beam (8) is directed on to the welded join with a defocused beam portion.

9. A method according to one of the preceding claims, wherein an increase in resistance to hot corrosion and/or oxidation is selected as the improved substance property and a hot corrosion-resistant and/or oxidation-resistant metal powder, possibly with different material components, is used as the powder (5), wherein it is preferably provided that a corrosion-resistant nickel powder or a metal powder containing a ceramic material is used as the powder (5).

10. A method according to one of the preceding claims, wherein the powder (5) is introduced into the laser beam (8), preferably being blown thereinto, spaced from the welded join.

11. A spark plug (1) for an internal combustion engine, wherein the spark plug (1) has at least two components which are connected together by way of at least one welded join, **characterised in that** in the region of the welded join there is an alloyed region created by melting a surface of the welded join and by introducing a powder (5), wherein at least the treated region (19) and preferably also a further untreated region (7) which is arranged immediately adjacent to the treated region (19) are coated with a cover layer (6) or a plurality of mutually superposed cover layers (6) which preferably comprise different materials and/or at least one such cover layer (6) is arranged beneath the treated region (19).

12. A spark plug according to the preceding claim, wherein the components which are connected together by way of the at least one welded join are parts of an electrode of the spark plug (1), preferably in the form of an electrode carrier, particularly preferably a central electrode carrier (3), and a noble metal body (2) connected to the electrode carrier by way of the at least one welded join.

13. A spark plug according to one of the two preceding claims, wherein an untreated region (19) is left immediately adjacent to the alloyed region, which untreated region (19) is preferably in the form of a region arranged adjacent to a spark surface (9) of the electrode.

## Revendications

1. Procédé de fabrication d'une bougie d'allumage (1) pour un moteur à combustion interne, dans lequel la bougie d'allumage (1) présente au moins deux composants qui sont reliés entre eux par le biais d'au moins une liaison soudée fabriquée dans un processus de soudage, **caractérisé en ce que** pour l'amélioration de propriétés de substance sélectionnées de la liaison soudée un faisceau laser (8) est dirigé sur la liaison soudée et qu'une poudre (5) améliorant les propriétés de substance sélectionnées est introduite dans la liaison soudée fondue par le faisceau laser (8) au niveau de sa surface de sorte que la poudre (5) fonde et par la liaison de la poudre fondue (5) avec la structure de mélange fondu de la surface de la liaison soudée il résulte une zone traitée avec des propriétés de substance améliorées, dans lequel des parties d'une électrode de la bougie d'allumage sont utilisées comme les au moins deux composants reliés entre eux par le biais de l'au moins une liaison soudée, de préférence sous la forme d'un support d'électrode et d'un corps en métal spécial (2, 2') relié au support d'électrode par le biais de l'au moins une liaison soudée, dans lequel au moins la zone traitée (19) et de préférence aussi une autre zone non traitée (7) agencée de manière directement contigüe à la zone traitée (19) est revêtue d'une couche de revêtement (6) ou de plusieurs couches de revêtement (6) agencées les unes sur les autres qui se composent de préférence de différents matériaux et/ou au moins une telle couche de recouvrement (6) est agencée en dessous de la zone traitée (19).

2. Procédé selon la revendication 1, dans lequel un support d'électrode central (3), réalisé de préférence sous la forme d'une broche de bougie d'allumage, est utilisé comme support d'électrode.

3. Procédé selon la revendication précédente, dans lequel le corps en métal spécial (2, 2') est relié avant l'établissement d'au moins une liaison soudée en réalisant un niveau (4) au support d'électrode central (3).

4. Procédé selon la revendication précédente, dans lequel le niveau (4) est formé dans une zone d'extrémité du support d'électrode central (3) et/ou le corps en métal spécial (2, 2') est placé en laissant un niveau (4) sur le support d'électrode central (3).

5. Procédé selon l'une quelconque des revendications précédentes, dans lequel une cavité (14) est présente, dans laquelle la poudre (5) est introduite et ce de préférence dans une quantité telle que la cavité (14) soit remplie ou soit recouverte par de la poudre fondue et de nouveau solidifiée (5).

6. Procédé selon la revendication précédente, dans lequel une quantité éventuellement débordante de poudre (5) fondue et de nouveau solidifiée (5) est retirée par enlèvement de matériau.

7. Procédé selon l'une quelconque des revendications précédentes, dans lequel une zone non traitée (7) est laissée de manière directement contigüe à la zone traitée (19).

8. Procédé selon l'une quelconque des revendications précédentes, dans lequel le faisceau laser (8) est dirigé avec une section de faisceau défocalisée sur la liaison soudée.

9. Procédé selon l'une quelconque des revendications précédentes, dans lequel comme propriété de substance améliorée une augmentation de la résistance à la corrosion à chaud et/ou à l'oxydation est sélectionnée et une poudre métallique résistante à la corrosion à chaud et/ou à l'oxydation, éventuellement avec différents composants de matériau est utilisée comme poudre (5), dans lequel il est de préférence prévu qu'une poudre de nickel résistante à la corrosion, ou une poudre métallique contenant un matériau céramique soit utilisée comme poudre (5).

10. Procédé selon l'une quelconque des revendications précédentes, dans lequel la poudre (5) est introduite, de préférence insufflée à distance de la liaison soudée dans le faisceau laser (8).

11. Bougie d'allumage (1) pour un moteur à combustion interne, dans laquelle la bougie d'allumage (1) présente au moins deux composants qui sont reliés entre eux par le biais d'au moins une liaison soudée, **caractérisée en ce que** dans la zone de la liaison soudée une zone alliée, générée par fonte d'une surface de la liaison soudée et par introduction de poudre (5) est présente, dans laquelle au moins la zone traitée (19) et de préférence aussi une autre zone non traitée (7) agencée de manière directement contiguë à la zone traitée (19) est revêtue d'une couche de recouvrement (6) ou de plusieurs couches de recouvrement (6) agencées les unes sur les autres qui se composent de préférence de différents matériaux et/ou au moins une telle couche de recouvrement (6) est agencée en dessous de la zone traitée (19).

12. Bougie d'allumage selon la revendication précédente, dans laquelle les composants reliés entre eux par le biais d'au moins une liaison soudée sont des pièces d'une électrode de la bougie d'allumage (1), de préférence sous la forme d'un support d'électrode, de manière particulièrement préférée d'un support d'électrode central (3), et d'un corps en métal spécial (2) relié au support d'électrode par le biais de l'au moins une liaison soudée.

13. Bougie d'allumage selon l'une quelconque des deux revendications précédentes, dans laquelle une zone non traitée (19) est laissée de manière directement contigüe à la zone alliée, laquelle se présente de préférence sous la forme d'une zone agencée de manière contiguë à une surface d'allumage (9) de l'électrode.
